# EUROPÄISCHE PATENTSCHRIFT

(11) **EP 3 124 298 B1**
(45) Veröffentlichungstag und Bekanntmachung des Hinweises auf die Patenterteilung: **13.09.2017**
(21) Anmeldenummer: 16180839.9
(22) Anmeldetag: 22.07.2016
(51) Int. Cl.: B60H 1/34

(54) **BELÜFTUNGSEINRICHTUNG**
VENTILATION DEVICE
DISPOSITIF D'AERATION

(30) Priorität: 30.07.2015 DE 102015112572; 30.07.2015 DE 102015112571
(43) Veröffentlichungstag der Anmeldung: 01.02.2017
(73) Patentinhaber: Dr. Schneider Kunststoffwerke GmbH, 96317 Kronach (DE)
(72) Erfinder: Schneider, Johannes, 96328 Küps (DE)
(74) Vertreter: Pröll, Jürgen

(56) Entgegenhaltungen:
- EP-A1- 1 162 095
- WO-A2-02/02361
- JP-A- 2001 138 727
- JP-A- 2002 103 951
- US-B1- 6 209 404

## Beschreibung

Es wird eine Belüftungseinrichtung mit einer Ausströmeinheit beschrieben, die in einer Aufnahme eines Verkleidungsteils eines Kraftfahrzeugs bewegbar gelagert ist. Die Belüftungseinrichtung kann an einem Fahrzeugarmaturenbrett angeordnet und so in dem Fahrzeugarmaturenbrett gelagert sein, dass die Ausströmeinheit in einem aktiven Zustand eine Luftzufuhr in einen Fahrzeuginnenraum ermöglicht und in einem passiven Zustand in der Aufnahme des Fahrzeugarmaturenbretts aufgenommen ist. Die Ausströmeinheit bildet dann mit dem Fahrzeugarmaturenbrett im Wesentlichen eine homogene Oberfläche.

Eine derartige Belüftungsanordnung für Kraftfahrzeuge ist aus DE 10 2011 100 059 A1 bekannt. Die Belüftungsanordnung umfasst eine Konsole mit einer Konsolenoberfläche in der eine Aufnahme ausgebildet ist. Die Konsole kann beispielsweise an dem Fahrzeugarmaturenbrett eines Fahrzeugs angeordnet sein. Ferner umfasst die Belüftungsanordnung einen an der Konsole bewegbar gelagerten Luftausströmer, der in eine Öffnungs- und Schließstellung bewegt werden kann, wobei der Luftausströmer in Öffnungsstellung aus der Aufnahme ragt und in Schließstellung in der Aufnahme zumindest teilweise versenkt ist. Der Luftausströmer ist zum Verbringen von der Öffnungsin die Schließstellung und umgekehrt verschwenkbar um eine parallel zur Luftaustrittsfläche verlaufende Schwenkachse in der Aufnahme gelagert.

Die Belüftungsanordnung von DE 10 2011 100 059 A1 benötigt eine relativ große Schwenkfläche an einem Fahrzeugarmaturenbrett. Das bedeutet, dass an dem Armaturenbrett eine größere Fläche zum Verschwenken für den Luftausströmer erforderlich ist, als die tatsächliche Nutzfläche, d.h. Ausströmfläche bzw. Ausströmöffnung des Luftausströmers. Zumindest ein Bereich des Fahrzeugarmaturenbretts muss für den Luftausströmer vorgehalten werden, wobei ein Großteil dieser Fläche nicht zum Ausströmen der Luft verwendet wird. Darüber hinaus verändert sich das Erscheinungsbrett des Armaturenbretts in der Öffnungs- und Schließstellung erheblich.

Aus der DE 41 36 822 A1 ist eine Luftausströmvorrichtung für den Innenraum von Kraftfahrzeugen offenbart. Diese Luftausströmvorrichtung ist mit einer im Endabschnitt einer Luftführung vorgesehenen, zur Steuerung der Ausströmrichtung des Luftstromes bewegbar angeordneten Belüftungdüse und einer dieser stromab zugeordneten Blende, mit über Stege getrennten, schlitzartigen Ausströmöffnungen, ausgestattet. Die Luftleitelemente der Belüftungsdüse fluchten in einer gewählten Ausströmrichtung mit den Stegen. Die Luftleitelemente sind an einer um eine Drehachse bewegbaren Belüftungsdüse angeordnet und die Belüftungsdüse steht derart mit einem Schrittgetriebe einer Betätigungseinrichtung in Antriebsverbindung, dass in jeder gewählten Ausströmrichtung die Luftleitelemente mit benachbarten Stegen der Blende fluchten. Weiterhin offenbart EP 1 162 095 eine Belüftungseinrichtung, aufweisend eine Ausströmeinheit, die in einer Aufnahme eines Verkleidungsteils eines Kraftfahrzeugs bewegbar gelagert ist, wobei die Ausströmeinheit um eine Schwenkachse verschiebbar gelagert ist. Es ist daher Aufgabe, eine Belüftungseinrichtung mit einer Ausströmeinheit anzugeben, welche im aktiven Zustand (Öffnungsstellung), wenn über die Ausströmeinheit Luft in einen Fahrgastraum geführt wird, und im passiven Zustand (Schließstellung), wenn über die Ausströmeinheit keine Luft in den Fahrgastraum geführt wird, eine im Wesentlichen homogene Oberfläche am Armaturenbrett bzw. eines Verkleidungsteils eines Kraftfahrzeugs bereitstellt. Dabei soll über eine Öffnung eines Verkleidungsteils eines Kraftfahrzeugs im aktiven Zustand die Luft ausströmen und die Öffnung im passiven Zustand verdeckt sein.

Die Aufgabe wird durch eine Belüftungseinrichtung mit den in Anspruch 1 angegebenen technischen Merkmalen gelöst. Vorteilhafte Weiterbildungen sind in den Unteransprüchen im Detail angegeben.

Bei einer Belüftungseinrichtung, welche die vorstehend genannte Aufgabe löst, aufweisend eine Ausströmeinheit, die in einer Aufnahme eines Verkleidungsteils an das Kraftfahrzeug bewegbar gelagert ist,
- ist die Ausströmeinheit um eine Schwenkachse verdrehbar und transversal zur Schwenkachse verschiebbar gelagert,
- ist die Ausströmeinheit über ein erstes Malteserkreuz-Getriebe mit einer Antriebseinheit gekoppelt,
- weist das erste Malteserkreuz-Getriebe ein mit der Ausströmeinheit verbundenes erstes Sternrad und ein dem ersten Sternrad gegenüberliegendes zweites Sternrad auf,
- liegen die Rotationsachsen des ersten Sternrads und des zweiten Sternrads auf der Schwenkachse der Ausströmeinheit,
- weist das erste Malteserkreuz-Getriebe ein erstes Antriebsrad auf, dessen Rotationsachse beabstandet zur Schwenkachse verläuft
- weist das erste Antriebsrad auf der der Ausströmeinheit zugewandten Seite einen ersten Stift und auf der dem zweiten Sternrad zugewandten Seite zwei gegenüberliegende zweite Stifte auf,
- weisen das erste Sternrad einen Schlitz und das zweite Sternrad zwei Schlitze auf,
- ist das erste Antriebsrad mit einer Antriebseinheit gekoppelt, und
- ist das zweite Sternrad über ein schwenkbar gelagertes Verbindungselement mit der Aufnahme verbunden.

Unter einem Malteserkreuz-Getriebe versteht man im Allgemeinen ein Getriebe, welches ein Sternrad aufweist, das nach seinem charakteristischen, in der Form dem Malteserkreuz ähnlichen Bauteil benannt ist. Mit einem Malteserkreuz-Getriebe lassen sich kontinuierliche Drehbewegungen in intermittierende Drehbewegungen umwandeln oder die Zahl von Drehungen begrenzen. Klassische Sternräder weisen vier Schlitze auf. Darüber hinaus gibt es Sternräder bei Malteserkreuz-Getrieben, die mehr als vier Schlitze aufweisen. Zudem weist ein Malteserkreuz-Getriebe ein Antriebsrad auf, das mindestens einen Stift aufweist, der bei jeder Drehung in einen Schlitz des Sternrades eingreift und dieses so lange mitnimmt, bis der Stift wieder aus dem Schlitz austritt. Das Antriebsrad kann eine kreissektorförmige Sperrscheibe aufweisen, die nach dem Austritt des Stifts aus dem Schlitz des Sternrads in einen Bereich zwischen zwei Schlitzen eingreift und das Malteserkreuz am Umfang festhält, so dass das Sternrad nicht weiter verdreht wird.

Die Ausbildung der Belüftungseinrichtung ermöglicht ein Verfahren und Verschwenken der Ausströmeinheit in eine Öffnungsstellung durch Rotation des ersten Antriebsrads in einer ersten Richtung und in eine Schließstellung durch Rotation des ersten Antriebsrads in einer zweiten Richtung, wobei die zweite Drehrichtung entgegengesetzt zur ersten Richtung gerichtet ist. Hierbei bewirkt das zweite Sternrad, das über das Verbindungselement mit der Aufnahme verbunden ist, ein Verfahren der Ausströmeinheit transversal zur Schwenkachse und das fest mit der Ausströmeinheit verbundene erste Sternrad ein Verschwenken der Ausströmeinheit. Zum Verbringen in die Öffnungsstellung und zum Verbringen in die Schließstellung muss das erste Antriebsrad jeweils nur in einer Richtung verdreht werden. Mehrere Antriebseinheiten oder voneinander getrennte Antriebe sind hierbei nicht erforderlich. Die Anordnung ermöglicht dabei, dass in der Öffnungsstellung die Ausströmeinheit die Luftzufuhr eines Luftstroms in den Fahrgastraum bereitstellt, wobei im Wesentlichen nur die Ausströmöffnung der Ausströmeinheit sichtbar ist. Zudem ist in einer Schließstellung beispielsweise eine Seitenwand der Ausströmeinheit sichtbar, die ein Verkleidungsteil aufweist, welches die Öffnung des Verkleidungsteils verschließt und entsprechend der Oberfläche des Verkleidungsteils ausgebildet ist. Sowohl die Austrittsöffnung der Ausströmeinheit als auch die Seitenwand der Ausströmeinheit mit einer Deckfläche schließen im Wesentlichen bündig mit der Oberfläche des Verkleidungsteils des Kraftfahrzeugs ab. Die Belüftungseinrichtung ermöglicht daher das Bereitstellen eines Luftstroms über eine Belüftungseinrichtung, wobei keine weiteren Flächen des Verkleidungsteils für das Verschwenken und Verfahren der Ausströmeinheit benötigt werden.

Die Ausströmeinheit kann zusätzlich über mindestens ein zweites Malteserkreuz-Getriebe mit der Antriebseinheit gekoppelt sein, wobei
- das zweite Malteserkreuz-Getriebe ein mit der Ausströmeinheit verbundenes erstes Sternrad und ein dem ersten Sternrad gegenüberliegendes zweites Sternrad aufweist,
- die Rotationsachsen des ersten Sternrads und des zweiten Sternrads auf der Schwenkachse der Ausströmeinheit liegen,
- das zweite Malteserkreuz-Getriebe ein zweites Antriebsrad aufweist, dessen Rotationsachse beabstandet zur Schwenkachse verläuft,
- das zweite Antriebsrad auf der der Ausströmeinheit zugewandten Seite einen ersten Stift und auf der dem zweiten Sternrad zugewandten Seite zwei gegenüberliegende zweite Stifte aufweist,
- das erste Sternrad einen Schlitz und das zweite Sternrad zwei Schlitze aufweisen, und
- das zweite Antriebsrad mit der Antriebseinheit gekoppelt ist.

Eine Belüftungseinrichtung mit zwei Malteserkreuz-Getrieben, die an zwei gegenüberliegenden Seitenwänden der Ausströmeinheit angeordnet sind, ermöglicht ein synchrones Verschwenken und Verfahren der Ausströmeinheit.

Das zweite Sternrad des zweiten Malteserkreuz-Getriebes kann über ein schwenkbar gelagertes zweites Verbindungselement mit der Aufnahme verbunden sein. Hierdurch wird insbesondere ein synchroneres Verschwenken der Ausströmeinheit sichergestellt.

Das erste Antriebsrad und/oder das zweite Antriebsrad können über ein Getriebe mit der Antriebseinheit gekoppelt sein. Eine Getriebeanordnung stellt eine entsprechende Über bzw. Untersetzung einer Drehbewegung bereit, welche über die Antriebseinheit auf das erste Antriebsrad und/oder auf das zweite Antriebsrad übertragen wird.

Die zwei Schlitze des zweiten Sternrades des ersten Malteserkreuz-Getriebes und/oder des zweiten Malteserkreuz-Getriebes können um 90 Grad versetzt zueinander angeordnet sein. Bei einer derartigen Anordnung der Schlitze und Ausbildung der Malteserkreuz-Getriebe wird ein Verschwenken mit der Ausströmeinheit um 90 Grad erreicht. Dies ermöglicht eine einfache Ausbildung der Ausströmeinheit, beispielsweise mit jeweils zwei Paaren von sich gegenüberliegenden Seitenenden. Sind die Seitenwände entsprechend anderweitig ausgebildet, wobei ein Verschwenken um beispielsweise 70 Grad ausreichend ist, um die Ausströmeinheit von einer Öffnungsstellung in eine Schließstellung zu verbringen, so kann auch der Abstand der beiden Schlitze des zweiten Sternrads, sowohl des ersten Malteserkreuz-Getriebes als auch des zweiten Malteserkreuz-Getriebes, 70 Grad betragen. Selbstverständlich sind auch andere Abstände zwischen diesen beiden Schlitzen in Abhängigkeit der Ausbildung eines Gehäuses der Ausströmeinheit möglich und in weiteren Ausführungsformen vorgesehen.

Das erste Antriebsrad kann mit dem zweiten Antriebsrad gekoppelt sein. Eine Kopplung des ersten Antriebsrads mit dem zweiten Antriebsrad ermöglicht das Vorsehen nur einer einzigen Antriebseinheit.

Beispielsweise können in weiteren Ausführungsformen das erste Antriebsrad und das zweite Antriebsrad über eine Zahnradanordnung und eine Welle miteinander gekoppelt sein. Das erste Antriebsrad oder das zweite Antriebsrad sind dann mit der Antriebseinheit gekoppelt, wobei eine Übertragung der Drehbewegung auf das jeweils andere Antriebsrad erfolgt. Eine einzige Antriebseinheit reduziert die Kosten für die Belüftungseinrichtung und reduziert zudem das Gewicht der Belüftungseinrichtung. Zudem wird ein geringerer Platz für die Belüftungseinrichtung benötigt. Zudem ist die Ansteuerung beispielsweise elektronischer Komponenten, insbesondere im Hinblick auf ein synchrones Verschwenken und Verfahren, einfacher zu realisieren, wenn nur eine einzige Antriebseinheit vorgesehen ist.

Mindestens die Ausströmeinheit, das zweite Sternrad des ersten Malteserkreuz-Getriebes und das erste Antriebsrad können an einer verschiebbaren ersten Schlitteneinheit und/oder mindestens die Ausströmeinheit, das zweite Sternrad des zweiten Malteserkreuz-Getriebes und das zweite Antriebsrad können an einer verschiebbaren zweiten Schlitteneinheit angeordnet sein.

Dazu kann die Aufnahme mindestens eine in Verschieberichtung der Ausströmeinheit verlaufende Führung aufweisen, in der die ersten Schlitteneinheit und/oder die zweite Schlitteneinheit verschiebbar gelagert sind. Über die erste Schlitteneinheit und/oder die zweite Schlitteneinheit sind die Ausströmeinheit, das zweite Sternrad und zumindest eines der Antriebsräder relativ zu dem Verkleidungsteil verschiebbar, wobei die Verschieberichtung über die Führung definiert wird.

Die Antriebseinheit kann in weiteren Ausführungsformen einen Elektromotor aufweisen. Der Elektromotor wird über eine Steuereinheit betrieben. Die Steuereinheit kann in unmittelbarer Nähe der Öffnung an dem Verkleidungsteil des Kraftfahrzeugs oder an einer entfernt gelegenen Stelle angeordnet sein. Die Steuereinheit kann zudem auch Teil einer Steuerung für weitere in einem Kraftfahrzeug angeordnete Komponenten sein, wie z.B. einer Klimaanlage.

Die Ausströmeinheit kann mindestens eine Luftablenkungseinrichtung aufweisen. Eine Luftablenkungseinrichtung umfasst beispielsweise horizontal und vertikal verlaufende Lamellen, die über ein Bedienelement verschwenkbar sind. Die Lamellen sind dann in einem Gehäuse gelagert, wobei das Gehäuse in der Aufnahme verschwenkbar und verschiebbar geführt ist. Das erste Sternrad oder die ersten Sternräder sind dann an gegenüberliegenden Seitenwänden des Gehäuses angeordnet.

Eine parallel zur Schwenkachse verlaufende Seitenwand der Ausströmeinheit kann so dimensioniert sein, dass diese Seitenwand in eine Öffnung der Aufnahme einsetzbar ist. Diese Seitenwand ist beispielsweise Teil eines Gehäuses oder an dem Gehäuse der Ausströmeinheit angeordnet. Im aktiven oder geöffneten Zustand ist die Ausströmeinheit derart gelagert, dass über einen Luftkanal zugeführte Luft aus einer Öffnung des Verkleidungsteils durch die Ausströmeinheit austreten kann. Im inaktiven oder geschlossenen Zustand ist die Ausströmeinheit verschwenkt, wobei die Seitenwand in der Aufnahmeöffnung des Verkleidungsteils aufgenommen ist. Im geschlossenen Zustand kann das Verkleidungsteil mit der Seitenwand eine im Wesentlichen homogene Oberfläche aufweisen. In Abhängigkeit der Fertigungstoleranzen kann zwischen dieser Seitenwand und einer umlaufenden Umrandung in dem Verkleidungsteil ein sehr kleiner, kaum sichtbarer Spalt bestehen. Die Ausströmeinheit ist daher verdeckt in der Aufnahme angeordnet.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung einer Belüftungseinrichtung und eines Teils eines Armaturenbretts in schematischer Ansicht;
- Fig. 2: eine perspektivische Rückansicht der Anordnung von Fig. 1 in schematischer Ansicht;
- Fig. 3: eine Rückansicht von Komponenten der Anordnung von Fig. 1 in schematischer Ansicht;
- Fig. 4: eine schematische Seitenansicht von Komponenten der Anordnung von Fig. 1;
- Fig. 5: eine perspektivische Darstellung von Komponenten der Anordnung von Fig. 1 in schematischer Ansicht;
- Fig. 6: eine weitere perspektivische Darstellung von Komponenten der Anordnung von Fig. 1 in schematischer Ansicht;
- Fig. 7: eine weitere perspektivische Darstellung von Komponenten der Anordnung von Fig. 1 in schematischer Ansicht;
- Fig. 8: eine weitere perspektivische Darstellung von Komponenten der Anordnung von Fig. 1 in schematischer Ansicht;
- Fig. 9: eine noch weitere perspektivische Darstellung von Komponenten der Anordnung von Fig. 1 in schematischer Ansicht;
- Fig. 10: eine schematische Darstellung von Antriebselementen einer Belüftungseinrichtung der Anordnung von Fig. 1;
- Fig. 11: eine schematische Seitenansicht einer Ausströmeinheit der Belüftungseinrichtung der Anordnung von Fig. 1;
- Fig. 12: eine schematische Seitenansicht von Antriebselementen und der Ausströmeinheit der Belüftungseinrichtung der Anordnung von Fig. 1;
- Fig. 13: eine schematische Seitenansicht eines zweiten Sternrads und eines Verbindungselementes der Belüftungseinrichtung der Anordnung von Fig. 1; und
- Fig. 14: eine schematische Seitenansicht von Antriebselementen der Belüftungseinrichtung der Anordnung von Fig. 1.

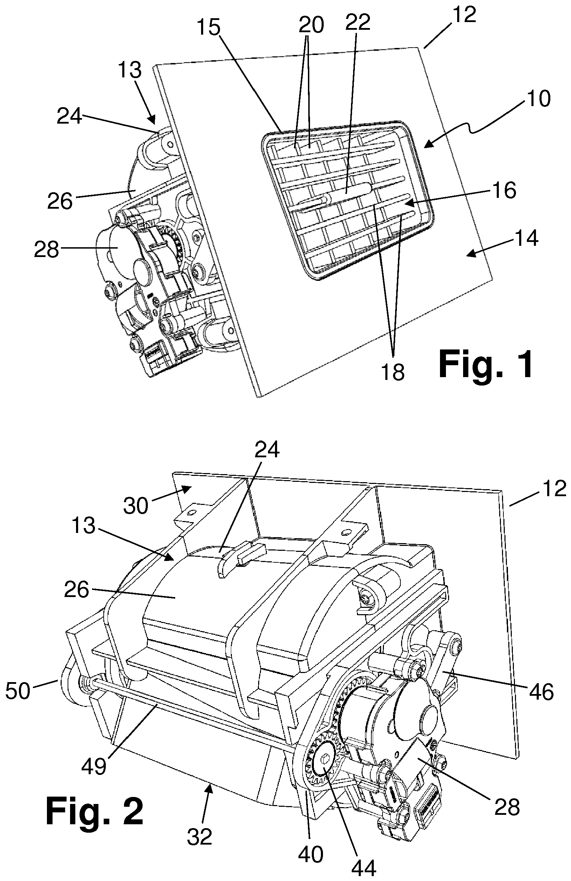

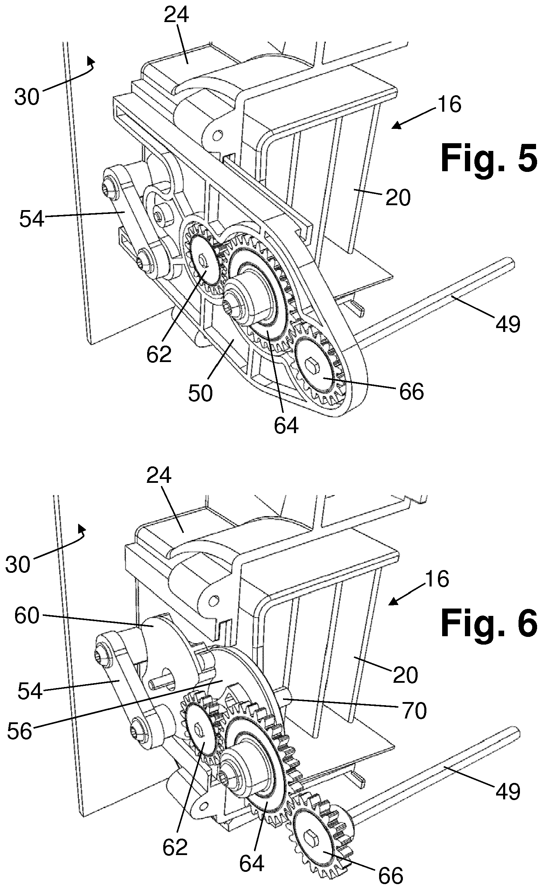

Die Fig. 1 bis 14 zeigen eine beispielhafte Ausführungsform für eine Belüftungseinrichtung 10, die eine Ausströmeinheit 16 aufweist, welche in einer Aufnahme 13 eines Armaturenbrettes 12 eines Kraftfahrzeugs bewegbar gelagert ist.

In den Figuren mit gleichen Bezugszeichen versehene Teile und Komponenten entsprechen im Wesentlichen einander, sofern nichts anderes angegeben ist. Im Weiteren wird darauf verzichtet, Bestandteile und Komponenten zu beschreiben, welche nicht wesentlich für das Verständnis der hierin offenbarten technischen Lehre sind.

Nachfolgend wird die Belüftungseinrichtung 10 mit Bezug auf die Fig. 1 bis 14 beschrieben.

Die Belüftungseinrichtung 10 ist in einer Aufnahme 13 eines Armaturenbrettes 12 bewegbar gelagert. Fig. 1 zeigt einen Zustand, in der eine Ausströmeinheit 16 der Belüftungseinrichtung 10 derart positioniert ist, dass ein Luftstrom über einen Luftzuführkanal in einen Fahrgastraum bereitgestellt wird. Hierzu ist die Ausströmeinheit 16 derart gelagert, dass eine Austrittsöffnung der Ausströmeinheit 16 im Wesentlichen bündig mit der Oberfläche 14 des Armaturenbretts 12 abschließt und in der Öffnung 15 des Armaturenbretts 12 aufgenommen ist. Das Armaturenbrett 12 ist in Fig. 1 nur schematisch angedeutet.

Die Ausströmeinheit 16 weist ein Gehäuse auf, in dem Horizontallamellen 18 und Vertikallamellen 20 schenkbar gelagert sind. Die Horizontallamellen 18 und die Vertikallamellen 20 können über ein Bedienelement 22 verschwenkt werden. Hierzu sind die Horizontallamellen 18 und die Vertikallamellen 20 jeweils über eine Koppelstange miteinander verbunden. Die Anordnung und Ausbildung derartiger Horizontallamellen 18 und Vertikallamellen 20 ist aus dem Stand der Technik bekannt.

Die Aufnahme 13 ist an einer Rückseite 30 des Armaturenbretts 12 angeordnet und besteht in der in den Figuren gezeigten Ausführung aus zwei Gehäuseteilen 24 und 26, die miteinander verschraubt sind. An dem Gehäuseteil 26 befindet sich ein Anschluss 32. Der Anschluss 32 ist mit einem Luftzuführkanal verbunden.

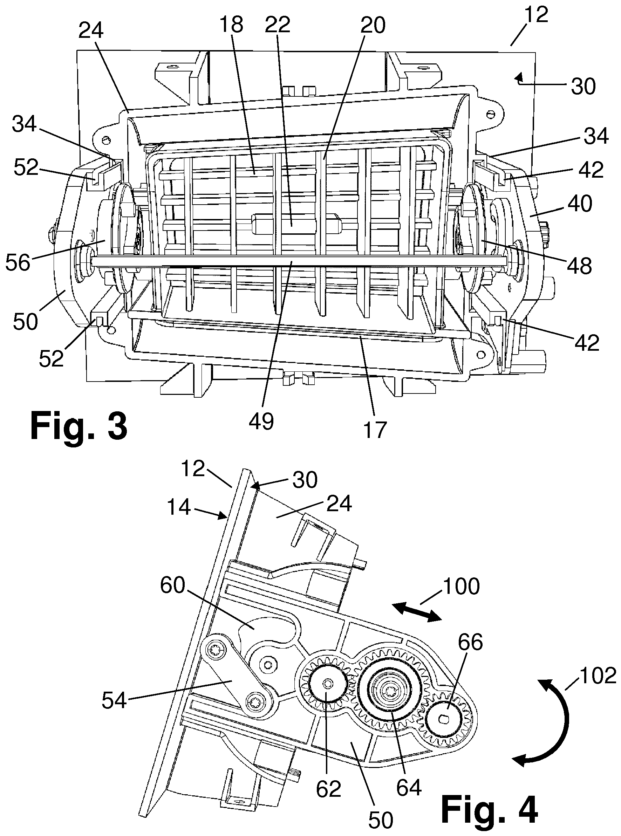

In Fig. 3 ist eine Rückansicht auf die Belüftungseinrichtung 10 gezeigt. Ferner ist in Fig. 3 nur das Gehäuseteil 24 dargestellt. Aus dieser Darstellung sind Führungen 34 ersichtlich, welche in Führungsnuten 42 und 52 einer ersten Schlitteneinheit 50 und einer zweiten Schlitteneinheit 40 greifen. Die erste Schlitteneinheit 50 und die zweite Schlitteneinheit 40 sind daher entlang den Führungen 34 verschiebbar. An der ersten Schlitteneinheit 50 und der zweiten Schlitteneinheit 40 ist die Ausströmeinheit 16 drehbar gelagert. Ferner sind an der ersten Schlitteneinheit 50 ein erstes Antriebsrad 56, ein zweites Sternrad 60, sowie Zahnräder 62, 64 und 66 drehbar gelagert. Mit dem zweiten Sternrad 60 ist zudem ein erstes Verbindungselement 54 schwenkbar verbunden, wobei ein erstes Ende des ersten Verbindungselementes 54 um eine Achse 92 verdrehbar mit dem zweiten Sternrad 60 verbunden ist und um eine Achse 90 verdrehbar mit einem Lagerzapfen 38 verbunden ist. Der Lagerzapfen 38 ist fest mit dem Gehäuseteil 24 verbunden.

Die zweite Schlitteneinheit 40 weist analog dazu ein zweites Verbindungselement 46 auf, das mit einem zweiten Sternrad verbunden ist. Zudem weist die zweite Schlitteneinheit 40 ein zweites Antriebsrad 48 und Zahnräder auf. Ein Zahnrad 44 der zweiten Schlitteneinheit 40 ist über eine Welle 49 mit dem Zahnrad 66 der ersten Schlitteneinheit 50 verbunden. An der zweiten Schlitteneinheit 40 ist zudem die Antriebseinheit 28 angeordnet, die zusammen mit der zweiten Schlitteneinheit 40 entlang den Führungen 34 verschoben werden kann. Über die Welle 49 und die zugehörigen Zahnräder 44 und 66 wird die von einem Elektromotor der Antriebseinheit 28 erzeugte Drehbewegung auf das zweite Antriebsrad 48 und das erste Antriebsrad 56 übertragen. Die Anordnung der Zahnräder 44, 66, 64 und 62 stellt sicher, dass ein synchrones Verfahren sowohl der ersten Schlitteneinheit 50, als auch der zweiten Schlitteneinheit 44 mit nur einem Elektromotor bzw. einer Antriebseinheit 28 durchgeführt werden kann. Eine Rotation der Zahnräder sowie des ersten Antriebsrads 56 und des zweiten Antriebsrads 48 bewirkt, wie später ausführlich beschrieben, ein Verdrehen des zweiten Sternrads 60 der ersten Schlitteneinheit 50 sowie eines zweiten Sternrads der zweiten Schlitteneinheit 40. Durch die Kopplung des zweiten Sternrads 60 der ersten Schlitteneinheit 50 und des zweiten Sternrads der zweiten Schlitteneinheit 40 mit dem ersten Gehäuseteil 24 über das erste Verbindungselement 54 und das zweite Verbindungselement 46 erfolgt ein Verfahren der ersten Schlitteneinheit 50 und der zweiten Schlitteneinheit 40 und damit ein Verfahren der Ausströmeinheit 16.

Das Verschieben der Ausströmeinheit 16 in Richtung des Pfeils 100 erfolgt durch die Kopplung des zweiten Sternrads 60 über das erste Verbindungselement 54 mit dem ersten Gehäuseteil 24 sowie durch die Kopplung des zweiten Sternrads der zweiten Schlitteneinheit 40 über das zweite Verbindungselement 46 mit dem ersten Gehäuseteil 24 in entsprechender Weise. Über die Welle 49 wird die über die Antriebseinheit 28 bereitgestellte Rotation auch auf die Schlitteneinheit 50 übertragen. Nachfolgend wird das Verfahren und Verschwenken der Ausströmeinheit 16 für die erste Schlitteneinheit 50 beschrieben, wobei das Verfahren und Verschwenken der Ausströmeinheit 16 in analoger Weise durch die zweite Schlitteneinheit 40 erfolgt.

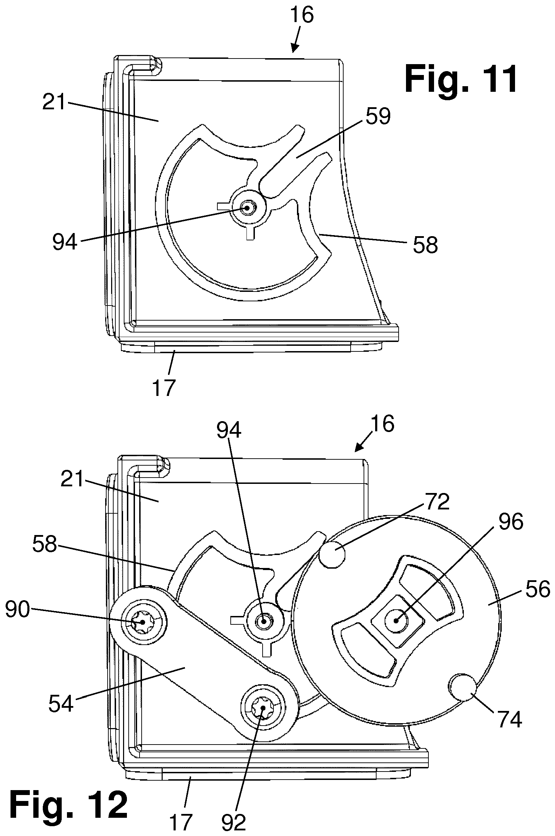

Die Ausströmeinheit 16 weist an einer Seitenwand 21 ein erstes Sternrad 58 auf (Fig. 11). Die Ausströmeinheit 16 weist an der der Seitenwand 21 gegenüberliegenden Seitenwand in entsprechender Weise ein weiteres erstes Sternrad auf, welches an der zweiten Schlitteneinheit 40 gelagert ist.

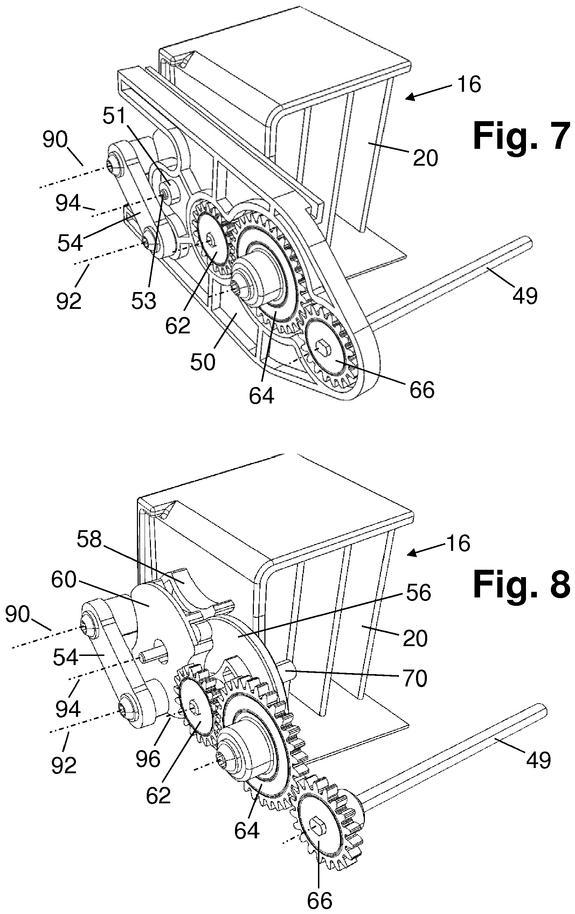

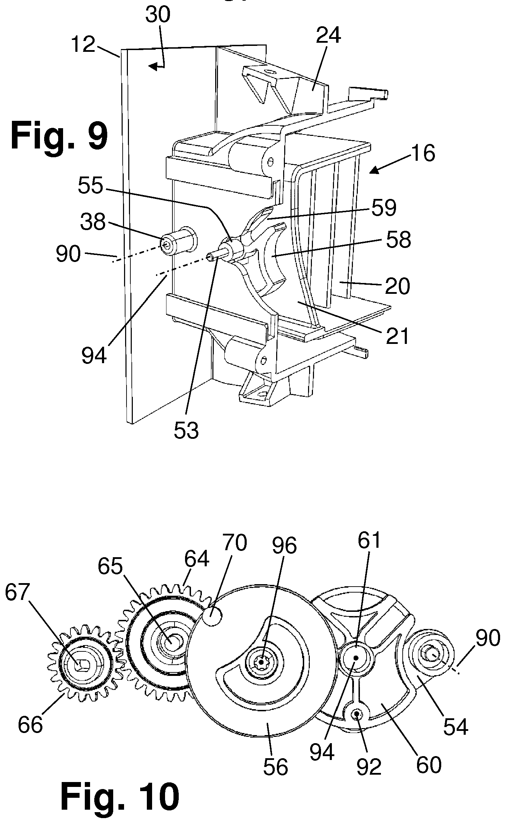

Das erste Sternrad 58 weist ein Lager 55 (Fig. 9) auf. Von dem Lager 55 erstreckt sich eine Welle 53, welche eine Schwenkachse 94 für die Ausströmeinheit 16 definiert. Die Welle 53 ist in einem Lager 51 der ersten Schlitteneinheit 50 aufgenommen (Fig. 7). Das zweite Sternrad 60 ist um die Schwenkachse 94 verdrehbar gelagert. Das erste Sternrad 58 weist einen Schlitz 59 auf. In den Schlitz 59 greift ein Stift 70 des ersten Antriebsrads 56. Wird das erste Antriebsrad 56 verdreht, so kann die gesamte Ausströmeinheit 16 verschwenkt werden. Das erste Antriebsrad 56 weist auf der gegenüberliegenden Seite weitere Stifte 72 und 74 auf, die in entsprechende Schlitze 80 und 82 des zweiten Sternrads 60 greifen können. Das zweite Sternrad 60 ist um die Schwenkachse 94 drehbar und über die Lageröffnung 61 verdrehbar auf der Welle 53 gelagert. Das erste Antriebsrad 56 ist mit dem Zahnrad 62 gekoppelt. Wird das Zahnrad 62 um die Rotationsachse 96 verdreht, erfolgt ein entsprechendes Verdrehen des ersten Antriebsrads 56. Befindet sich die Belüftungseinrichtung 10 in einem in Fig. 1 gezeigten Zustand, so wird zum Verbringen der Ausströmeinheit 16 in eine geschlossene Position bzw. passiven Zustand der Elektromotor der Antriebseinheit 28 so angesteuert, dass ein Verdrehen des zweiten Antriebsrads 48 derart erfolgt, dass die Ausströmeinheit 16 in Richtung des Pfeils 100 zurückverfahren und in Richtung des Pfeils 102 verschwenkt wird. Zudem wird die Ausströmeinheit 16 zum Verbringen in den passiven Zustand wieder nach vorne in Richtung des Pfeils 100 verfahren, sodass eine an einer unteren Gehäuseseite der Ausströmeinheit 16 angeordnete Verschlussfläche 17 (siehe Fig. 3, 11 und 12) in der Öffnung 15 des Armaturenbretts 12 aufgenommen wird. Damit die Ausströmeinheit 16 aus der in Fig. 1 gezeigten Position zurückverfahren, verschwenkt und wieder in die vordere Position verfahren wird, muss der Elektromotor der Antriebseinheit 28 eine Drehbewegung in nur einer Richtung ausführen. Soll die Ausströmeinheit 16 wieder zurück in die geöffnete Position verbracht werden, so erfolgt ebenfalls eine Rotation des Elektromotors der Antriebseinheit 28 in nur einer Richtung, wobei ein Zurückfahren der Ausströmeinheit 16, ein Verschwenken der Ausströmeinheit 16 und wiederrum ein Verfahren in die in Fig. 1 gezeigte Stellung erfolgt.

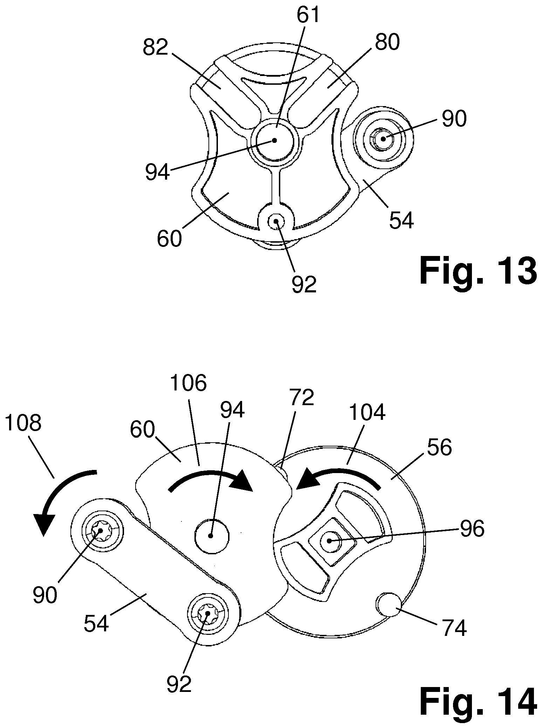

Im aktiven Zustand von Fig. 1 befindet sich die Ausströmeinheit 16 in einer vorderen Position, wobei die Ausströmöffnung der Ausströmeinheit 16 über die Öffnung 15 des Armaturenbretts 12 zugänglich ist. Soll nun die Ausströmeinheit 16 derart verfahren und verschwenkt werden, dass die Verschlussfläche 17 in die Öffnung 15 aufgenommen wird, wird das erste Antriebsrad 56 über die Zahnräder 62, 64, 66, die über die Welle 49 mit dem zweiten Antriebsrad 48 und der Antriebseinheit 28 gekoppelt sind, derart verdreht, dass zuerst der Stift 72 in den Schlitz 82 gelangt, wobei das erste Antriebsrad 56 in Richtung des Pfeils 104 und dadurch das zweite Sternrad 60 in Richtung des Pfeils 106 verdreht werden (Fig. 14). Infolgedessen kommt es zu einem Verschwenken des ersten Verbindungselementes 54 in Richtung des Pfeils 108. Durch die Lagerung des ersten Verbindungselementes 54 am Lagerzapfen 38 kommt es zu einem Verschieben der ersten Schlitteneinheit 50 entlang den Führungen 34. Hierbei kommt es ebenso zu einer Verlagerung der Ausströmeinheit 16, wobei diese ihre Ausrichtung beibehält. Wird das erste Antriebsrad 56 weiter in Richtung des Pfeils 104 verdreht, gleitet der Stift 72 aus dem Schlitz 82 des zweiten Sternrads 60 heraus. Für das Verfahren der Ausströmeinheit 16 von der in Fig. 1 gezeigten Position in eine zurückgefahrene Position, erfolgt eine Drehung des ersten Antriebsrads 56 um 90 Grad. Bei einer weiteren Drehung des ersten Antriebsrads 56 um 90 Grad wird die gesamte Ausströmeinheit 16 um 90 Grad um die Schwenkachse 94 in Richtung des Pfeils 106 verdreht, da der Stift 70 in den Schlitz 59 des ersten Sternrads 58 gelangt. Wird das erste Antriebsrad 56 weiter um 90 Grad verdreht, gelangt der Stift 74 in den Schlitz 80 des zweiten Sternrads 60, wobei die Ausströmeinheit 16 durch die Kopplung des zweiten Sternrads 60 über das erste Verbindungselement 54 mit dem Lagerzapfen 38 des ersten Gehäuseteils 24 zurückverfahren wird. Dabei behält die Ausströmeinheit 16 ihre um 90 Grad verschwenkte Position bei, sodass die Verschlussfläche 17 anstelle der Ausströmöffnung der Ausströmeinheit 16 in der Öffnung 15 des Armaturenbretts 12 aufgenommen wird.

Soll anschließend die Ausströmeinheit 16 wieder verlagert und verschwenkt werden, um einen Luftstrom über die Öffnung 15 bereitzustellen, so wird in analoger Weise das erste Antriebsrad 56 in entgegen gesetzter Richtung zu dem Pfeil 104 verdreht, wobei zuerst der Stift 74 in den Schlitz 80 greift und ein Verfahren der gesamten Ausströmeinheit 16 und der ersten Schlitteneinheit 50 und der zweiten Schlitteneinheit 40 bewirkt. Anschließend wird wieder die Ausströmeinheit 16 verschwenkt, wobei der Stift 70 in den Schlitz 59 des ersten Sternrads 58 greift, und das Verschwenken der Ausströmeinheit 16 erreicht wird. Danach ergreift bei einem weiteren verdrehen um 90 Grad des ersten Antriebsrads 56 der Stift 72 in den Schlitz 82 und bewirkt somit ein Verfahren der Schlitteneinheit 50 und der zweiten Schlitteneinheit 40, über welche die Ausströmeinheit 16 gelagert ist, zurück in die in Fig. 1 gezeigte Position.

Die Lagerung der Ausströmeinheit 16 an der ersten Schlitteneinheit 50 und der zweiten Schlitteneinheit 40 sowie die Führung der ersten Schlitteneinheit 50 und der zweiten Schlitteneinheit 40 entlang den Führungen 34 stellt sicher, dass ein Verdrehen des zweiten Sternrads 60 über die Kopplung mit dem ersten Verbindungselement 54 und dem zweiten Verbindungselement 46 ein Verfahren in Richtung des Pfeils 100 sicherstellen. Für einen vollständigen Öffnungs- bzw. Schließzyklus müssen sich das erste Antriebsrad 56 und das zweite Antriebsrad 48 entweder um 270 Grad im Uhrzeigersinn oder um 270 Grad gegen den Uhrzeigersinn drehen. Aufgrund der Ausbildung der Antriebräder 48 und 56 sowie der ersten Sternräder 58 und zweiten Sternräder 60 erfolgt in einem ersten Teilzyklus bei einem Verdrehen um 90 Grad ein Verfahren der Ausströmeinheit 16, der ersten Schlitteneinheit 50 und der zweiten Schlitteneinheit 40 in Richtung des Pfeils 100 . In einem zweiten Teilzyklus, in welchem ein weiteres Verdrehen um 90 Grad erfolgt, wird das Verschwenken der Ausströmeinheit 16 um 90 Grad in Richtung des Pfeils 102 durchgeführt. In einem dritten Teilzyklus bei einem weiteren Verdrehen um 90 Grad werden die Ausströmeinheit 16, die erste Schlitteneinheit 50 und die zweite Schlitteneinheit 40 in Richtung des Pfeils 100 wieder zurück in ihre Ausgangsposition verfahren.

Die erste Schlitteneinheit 50 und die zweite Schlitteneinheit 40 sind im Wesentlichen spiegelbildlich ausgebildet, wobei die Antriebseinheit 28 an der zweiten Schlitteneinheit 40 angeordnet ist. Damit eine synchrone Übertragung der Drehbewegung des Elektromotors der Antriebseinheit 28 erfolgt, ist das Zahnrad 44 der zweiten Schlitteneinheit 40 über die Welle 49 mit dem Zahnrad 66 der ersten Schlitteneinheit 50 gekoppelt. Das Zahnrad 66 weist hierbei eine Lageröffnung 67 auf, in welcher die Welle 49 verdrehfest aufgenommen ist. Das Zahnrad 66 ist wie das Zahnrad 44 verdrehbar an der ersten Schlitteneinheit 50 bzw. der zweiten Schlitteneinheit 40 angeordnet. Das Zahnrad 66 ist über ein Zahnrad 64 mit dem Zahnrad 66 gekoppelt, wobei das Zahnrad 64 um einen Lagerzapfen 65 verdrehbar an der ersten Schlitteneinheit 50 gelagert ist. Das Zahnrad 62 ist drehfest mit dem ersten Antriebsrad 56 gekoppelt, sodass eine Rotation des Zahnrads 62 um die Achse 96 ein entsprechendes Verdrehen des ersten Antriebsrads 56 bewirkt.

Die Belüftungseinrichtung 10 weist eine einfache Kinematik auf, wobei die Bewegungsabläufe (Verfahren, Verschwenken, Verfahren) nur einen Elektromotor benötigen, der zum Verbringen der Belüftungseinrichtung 10 von einer ersten Stellung in eine zweite Stellung in nur einer Richtung gedreht werden muss und zum Verbringen der Belüftungseinrichtung 10 von der zweiten Stellung in die erste Stellung ebenfalls nur einer Richtung, entgegengesetzt zur ersten Drehrichtung, verdreht werden muss. Daher ergibt sich eine einfach Ansteuerung der Belüftungseinrichtung 10. Zudem sind einfache Komponenten vorgesehen, die einen langlebigen Betrieb der Belüftungseinrichtung 10 sicherstellen. Durch das synchrone Verfahren der ersten Schlitteneinheit 50 und der zweiten Schlitteneinheit 40 mittels nur einer Antriebseinheit 28 wird zudem nur ein geringer Platzbedarf für die verwendeten Komponenten benötigt. Dies wirkt sich auch kostengünstig für die gesamte Anordnung aus.

### Bezugszeichenliste

- 10: Belüftungseinrichtung
- 12: Armaturenbrett
- 13: Aufnahme
- 14: Oberfläche
- 15: Öffnung
- 16: Ausströmeinheit
- 17: Verschlussfläche
- 18: Horizontallamellen
- 20: Vertikallamellen
- 21: Seitenwand
- 22: Bedienelement
- 24: Gehäuseteil
- 26: Gehäuseteil
- 28: Antriebseinheit
- 30: Rückseite
- 32: Anschluss
- 34: Führung
- 38: Lagerzapfen
- 40: zweite Schlitteneinheit
- 42: Führungsnut
- 44: Zahnrad
- 46: zweites Verbindungselement
- 48: zweites Antriebsrad
- 49: Welle
- 50: erste Schlitteneinheit
- 51: Lager
- 52: Führungsnut
- 53: Welle
- 54: erstes Verbindungselement
- 55: Lager
- 56: erstes Antriebrad
- 58: erstes Sternrad
- 59: Schlitz
- 60: zweites Sternrad
- 61: Lageröffnung
- 62: Zahnrad
- 64: Zahnrad
- 65: Lagerzapfen
- 66: Zahnrad
- 67: Lageröffnung
- 70: Stift
- 72: Stift
- 74: Stift
- 80: Schlitz
- 82: Schlitz
- 90: Achse
- 92: Achse
- 94: Schwenkachse
- 96: Rotationsachse
- 100: Pfeil
- 102: Pfeil
- 104: Pfeil
- 106: Pfeil
- 108: Pfeil

## Patentansprüche

1. Belüftungseinrichtung, aufweisend eine Ausströmeinheit (16), die in einer Aufnahme (13) eines Verkleidungsteils eines Kraftfahrzeugs bewegbar gelagert ist, wobei
- die Ausströmeinheit (16) um eine Schwenkachse (94) verdrehbar und transversal zur Schwenkachse (94) verschiebbar gelagert ist,
- die Ausströmeinheit (16) über ein erstes Malteserkreuz-Getriebe mit einer Antriebseinheit (28) gekoppelt ist,
- das erste Malteserkreuz-Getriebe ein mit der Ausströmeinheit (16) verbundenes erstes Sternrad (58) und ein dem ersten Sternrad (58) gegenüberliegendes zweites Sternrad (60) aufweist,
- die Rotationsachsen des ersten Sternrads (58) und des zweiten Sternrads (60) auf der Schwenkachse (94) der Ausströmeinheit (16) liegen,
- das erste Malteserkreuz-Getriebe ein erstes Antriebsrad (56) aufweist, dessen Rotationsachse (96) beabstandet zur Schwenkachse (94) verläuft,
- das erste Antriebsrad (56) auf der der Ausströmeinheit (16) zugewandten Seite einen ersten Stift (70) und auf der dem zweiten Sternrad (60) zugewandten Seite zwei gegenüberliegende zweite Stifte (72, 74) aufweist,
- das erste Sternrad (58) einen Schlitz (59) und das zweite Sternrad (60) zwei Schlitze (80, 82) aufweisen,
- das erste Antriebsrad (56) mit einer Antriebseinheit (28) gekoppelt ist, und
- das zweite Sternrad (60) über ein schwenkbar gelagertes Verbindungselement (54) mit der Aufnahme (13) verbunden ist.

2. Belüftungseinrichtung nach Anspruch 1, wobei die Ausströmeinheit (16) zusätzlich über mindestens ein zweites Malteserkreuz-Getriebe mit der Antriebseinheit (28) gekoppelt ist und
- das zweite Malteserkreuz-Getriebe ein mit der Ausströmeinheit (16) verbundenes erstes Sternrad und ein dem ersten Sternrad gegenüberliegendes zweites Sternrad aufweist,
- die Rotationsachsen des ersten Sternrads und des zweiten Sternrads auf der Schwenkachse (94) der Ausströmeinheit (16) liegen,
- das zweite Malteserkreuz-Getriebe ein zweites Antriebsrad (48) aufweist, dessen Rotationsachse beabstandet zur Schwenkachse (94) verläuft,
- das zweite Antriebsrad (48) auf der der Ausströmeinheit (16) zugewandten Seite einen ersten Stift und auf der dem zweiten Sternrad zugewandten Seite zwei gegenüberliegende zweite Stifte aufweist,
- das erste Sternrad einen Schlitz und das zweite Sternrad zwei Schlitze aufweisen, und
- das zweite Antriebsrad (48) mit der Antriebseinheit (28) gekoppelt ist.

3. Belüftungseinrichtung nach Anspruch 2, wobei das zweite Sternrad des zweiten Malteserkreuz-Getriebes über ein schwenkbar gelagertes zweites Verbindungselement (46) mit der Aufnahme (13) verbunden ist.

4. Belüftungseinrichtung nach einem der Ansprüche 1 bis 3, wobei das erste Antriebsrad (56) und/oder das zweite Antriebsrad (48) über ein Getriebe mit der Antriebseinheit (28) gekoppelt sind.

5. Belüftungseinrichtung nach einem der Ansprüche 1 bis 4, wobei die zwei Schlitze (80, 82) des zweiten Sternrads (60) um 90° versetzt zueinander angeordnet sind.

6. Belüftungseinrichtung nach einem der Ansprüche 2 bis 5, wobei das erste Antriebrad (56) mit dem zweiten Antriebsrad (48) gekoppelt ist.

7. Belüftungseinrichtung nach Anspruch 6, wobei das erste Antriebsrad (56) und das zweite Antriebsrad (48) über eine Zahnradanordnung und eine Welle (49) miteinander gekoppelt sind.

8. Belüftungseinrichtung nach einem der Ansprüche 1 bis 7, wobei mindestens die Ausströmeinheit (16), das zweite Sternrad (60) des ersten Malteserkreuz-Getriebes und das erste Antriebsrad (56) an einer verschiebbaren ersten Schlitteneinheit (50) und/oder mindestens die Ausströmeinheit (16), das zweite Sternrad des zweiten Malteserkreuz-Getriebes und das zweite Antriebsrad (48) an einer verschiebbaren zweiten Schlitteneinheit (40) angeordnet sind.

9. Belüftungseinrichtung nach Anspruch 8, wobei die Aufnahme (13) mindestens eine in Verschieberichtung der Ausströmeinheit (16) verlaufende Führung (34; 36) aufweist, in der die erste Schlitteneinheit (50) und/oder die zweite Schlitteneinheit (40) verschiebbar gelagert sind.

10. Belüftungseinrichtung nach einem der Ansprüche 1 bis 9, wobei die Antriebseinheit (28) einen Elektromotor aufweist.

11. Belüftungseinrichtung nach einem der Ansprüche 1 bis 10, wobei die Ausströmeinheit (16) mindestens eine Luftablenkungseinrichtung aufweist.

12. Belüftungseinrichtung nach einem der Ansprüche 1 bis 11, wobei eine parallel zur Schwenkachse (94) verlaufende Seitenwand der Ausströmeinheit (16) so dimensioniert ist, dass diese Seitenwand in eine Öffnung (15) der Aufnahme (13) einsetzbar ist.

## Claims

1. Air vent comprising an outflow unit (16) movably mounted in a mount (13) of a cladding element of a motor vehicle, wherein
- the outflow unit (16) is mounted to be rotatable about a pivot axis (94) and displaceable transversely to the pivot axis (94),
- the outflow unit (16) is coupled by way of a first Maltese cross transmission to a drive unit (28),
- the first Maltese cross transmission comprises a first star wheel (58) connected with the outflow unit (16) and a second star wheel (60) opposite the first star wheel (58),
- the axes of rotation of the first star wheel (58) and the second star wheel (60) lie on the pivot axis (94) of the outflow unit (16),
- the first Maltese cross transmission comprises a first drive wheel (56), the axis (96) of rotation of which extends at a spacing from the pivot axis (94),
- the first drive wheel (56) has a first pin (70) on the side facing the outflow unit (16) and two opposite second pins (72, 74) on the side facing the second star wheel (60),
- the first star wheel (58) has a slot (59) and the second star wheel (60) two slots (80, 82),
- the first drive wheel (56) is coupled to a drive unit (28) and
- the second star wheel (60) is connected with the mount (13) by way of a pivotably mounted connecting element (54).

2. Air vent according to claim 1, wherein the outflow unit (16) is additionally coupled to the drive unit (28) by way of at least one second Maltese cross transmission and
- the second Maltese cross transmission comprises a first star wheel connected with the outflow unit (16) and a second star wheel opposite the first star wheel,
- the axes of rotation of the first star wheel and the second star wheel lie on the pivot axis (94) of the outflow unit (16),
- the second Maltese cross transmission comprises a second drive wheel (48), the axis of rotation of which extends at a spacing from the pivot axis (94),
- the second drive wheel (48) has a first pin on the side facing the outflow unit (16) and two opposite second pins on the side facing the second star wheel,
- the first star wheel has a slot and the second star wheel two slots and
- the second drive wheel (48) is coupled to the drive unit (28).

3. Air vent according to claim 2, wherein the second star wheel of the second Maltese cross transmission is connected with the mount (13) by way of a pivotably mounted second connecting element (46).

4. Air vent according to any one of claims 1 to 3, wherein the first drive wheel (56) and/or the second drive wheel (48) is or are coupled to the drive unit (28) by way of a transmission.

5. Air vent according to any one of claims 1 to 4, wherein the two slots (80, 82) of the second star wheel (60) are arranged to be offset relative to one another by 90°.

6. Air vent according to any one of claims 2 to 5, wherein the first drive wheel (56) is coupled to the second drive wheel (48).

7. Air vent according to claim 6, wherein the first drive wheel (56) and the second drive wheel (48) are coupled together by way of a gearwheel arrangement and a shaft (49).

8. Air vent according to any one of claims 1 to 7, wherein at least the outflow unit (16), the second star wheel (60) of the first Maltese cross transmission and the first drive wheel (56) are arranged at a displaceable first slide unit (50) and/or at least the outflow unit (16), the second star wheel of the second Maltese cross transmission and the second drive wheel (48) are arranged at a displaceable second slide unit (40).

9. Air vent according to claim 8, wherein the mount (13) comprises at least one guide (34, 36) which extends in displacement direction of the outflow unit (16) and in which the first slide unit (50) and/or the second slide unit (40) is or are mounted to be displaceable.

10. Air vent according to any one of claims 1 to 9, wherein the drive unit (28) comprises an electric motor.

11. Air vent according to any one of claims 1 to 10, wherein the outflow unit (16) comprises at least one air deflecting device.

12. Air vent according to any one of claims 1 to 11, wherein a side wall, which extends parallel to the pivot axis (94), of the outflow unit (16) is so dimensioned that this side wall is insertable into an opening (15) of the mount (13).

## Revendications

1. Dispositif d'aération, comprenant une unité d'évacuation (16), étant montée mobile dans un logement (13) d'un élément de garniture d'un véhicule automobile, dans lequel
- l'unité d'évacuation (16) étant montée de manière à pouvoir tourner autour d'un axe de pivotement (94) et à pouvoir coulisser transversalement à l'axe de pivotement (94),
- l'unité d'évacuation (16) étant couplée à une unité d'entraînement (28) par un premier mécanisme de transmission à croix de Malte,
- le premier mécanisme de transmission à croix de Malte comprenant une première roue en étoile (58) reliée à l'unité d'évacuation (16) et une deuxième roue en étoile (60) opposée à la première roue en étoile (58),
- les axes de rotation de la première roue en étoile (58) et de la deuxième roue en étoile (60) étant situés sur l'axe de pivotement (94) de l'unité d'évacuation (16),
- le premier mécanisme de transmission à croix de Malte comprenant une première roue motrice (56) dont l'axe de rotation (96) s'étend à distance de l'axe de pivotement (94),
- la première roue motrice (56) comprenant sur la face tournée vers l'unité d'évacuation (16) une première tige (70) et sur la face tournée vers la deuxième roue en étoile (60) deux deuxièmes tiges (72, 74) opposées,
- la première roue en étoile (58) comprenant une fente (59) et la deuxième roue en étoile (60) comprenant deux fentes (80, 82),
- la première roue motrice (56) étant couplée à une unité d'entraînement (28), et
- la deuxième roue en étoile (60) étant reliée au logement (13) par un élément de liaison (54) monté pivotant.

2. Dispositif d'aération selon la revendication 1, dans lequel l'unité d'évacuation (16) est couplée en outre par au moins un deuxième mécanisme de transmission à croix de Malte à l'unité d'entraînement (28) et
- le deuxième mécanisme de transmission à croix de Malte comprend une première roue en étoile reliée à l'unité d'évacuation (16) et une deuxième roue en étoile opposée à la première roue en étoile,
- les axes de rotation de la première roue en étoile et de la deuxième roue en étoile sont situés sur l'axe de pivotement (94) de l'unité d'évacuation (16),
- le deuxième mécanisme de transmission à croix de Malte comprend une deuxième roue motrice (48) dont l'axe de rotation s'étend à distance de l'axe de pivotement (94),
- la deuxième roue motrice (48) comprend sur la face tournée vers l'unité d'évacuation (16) une première tige et sur la face tournée vers la deuxième roue en étoile deux deuxièmes tiges opposées,
- la première roue en étoile comprend une fente et la deuxième roue en étoile comprend deux fentes, et
- la deuxième roue motrice (48) est couplée à l'unité d'entraînement (28).

3. Dispositif d'aération selon la revendication 2, dans lequel la deuxième roue en étoile du deuxième mécanisme de transmission à croix de Malte est reliée au logement (13) par un deuxième élément de liaison (46) monté pivotant.

4. Dispositif d'aération selon l'une quelconque des revendications 1 à 3, dans lequel la première roue motrice (56) et/ou la deuxième roue motrice (48) sont couplées à l'unité d'entraînement (28) par un mécanisme de transmission.

5. Dispositif d'aération selon l'une quelconque des revendications 1 à 4, dans lequel les deux fentes (80, 82) de la deuxième roue en étoile (60) sont décalées de 90° l'une par rapport à l'autre.

6. Dispositif d'aération selon l'une quelconque des revendications 2 à 5, dans lequel la première roue motrice (56) est couplée à la deuxième roue motrice (48).

7. Dispositif d'aération selon la revendication 6, dans lequel la première roue motrice (56) et la deuxième roue motrice (48) sont couplées l'une à l'autre par un ensemble de roues dentées et par un arbre (49).

8. Dispositif d'aération selon l'une quelconque des revendications 1 à 7, dans lequel au moins l'unité d'évacuation (16), la deuxième roue en étoile (60) du premier mécanisme de transmission à croix de Malte et la première roue motrice (56) sont agencées sur une première unité à chariot (50) coulissante et/ou au moins l'unité d'évacuation (16), la deuxième roue en étoile du deuxième mécanisme de transmission à croix de Malte et la deuxième roue motrice (48) sont agencées sur une deuxième unité à chariot (40) coulissante.

9. Dispositif d'aération selon la revendication 8, dans lequel le logement (13) comprend au moins un guidage (34 ; 36) qui s'étend dans le sens de coulissement de l'unité d'évacuation (16), dans lequel la première unité à chariot (50) et/ou la deuxième unité à chariot (40) sont montées coulissantes.

10. Dispositif d'aération selon l'une quelconque des revendications 1 à 9, dans lequel l'unité d'entraînement (28) comprend un moteur électrique.

11. Dispositif d'aération selon l'une quelconque des revendications 1 à 10, dans lequel l'unité d'évacuation (16) comprend au moins un dispositif de déviation d'air.

12. Dispositif d'aération selon l'une quelconque des revendications 1 à 11, dans lequel une paroi latérale de l'unité d'évacuation (16), laquelle paroi s'étend parallèlement à l'axe de pivotement (94), est dimensionnée de manière à pouvoir être insérée dans une ouverture (15) du logement (13).
